# EUROPÄISCHE PATENTANMELDUNG

(11) **EP 0 849 112 A1**
(43) Veröffentlichungstag der Anmeldung: **24.06.1998**
(21) Anmeldenummer: 97122341.7
(22) Anmeldetag: 18.12.1997
(51) Int. Cl.: B60L 11/18, H02J 7/02, H02M 7/797

(54) **Drehstromantriebsanordnung**

(30) Priorität: 19.12.1996 DE 19652950
(71) Anmelder: ASK-Antriebs-, Steuerungs- und, industrielle Kommunikationssysteme GmbH, 38518 Gifhorn (DE)
(72) Erfinder: Krüger,Michael,Prof.Dr.-Ing., c/o ASK GmbH, 38518 Gifhorn (DE)
(74) Vertreter: Lins, Edgar, Dipl.-Phys. Dr.jur.

(57) **Zusammenfassung**

Bei einer Drehstromantriebsanordnung mit einer batteriegespeisten, drehzahlvariablen Drehstrommaschine (4, 4', 4''), gesteuerten Pulswechselrichterschaltungen (2) zur Erzeugung angenähert sinusförmiger Drehstromwechselspannungen für die entsprechenden Wicklungen der Drehstrommaschine aus der Batteriespannung und einer Aufladeeinrichtung einer Antriebsbatterie (1) aus einem Drehstromnetz läßt sich die Aufladeeinrichtung ohne wesentlichen zusätzlichen Aufwand in die Antriebsanordnung dadurch integrieren, daß für die Durchführung der Batterieladung (Ladebetrieb) Drehstrom-Netzanschlußklemmen (7) mit Wicklungen (3, 5) der Drehstrommaschine (4, 4', 4'') so verbunden sind, daß die Drehstrom-Netzspannung auf einen Scheitelwert unterhalb der Batteriespannung heruntertransformiert wird und daß ein Steuer- und Regelteil (10) die Pulswechselrichterschaltungen (2) so steuert, daß die Aufladung der Batterie (1) über die Pulswechselrichterschaltungen (2) nach dem Hochsetzstellerprinzip erfolgt.

## Beschreibung

Die Erfindung betrifft eine Drehstromantriebsanordnung mit einer batteriegespeisten, drehzahlvariablen Drehstrommaschine, gesteuerten Pulswechselrichterschaltungen zur Erzeugung angenähert sinusförmiger Drehstromwechselspannungen für die entsprechenden Wicklungen der Drehstrommaschine aus der Batteriespannung und einer Aufladeeinrichtung einer Antriebsbatterie aus einem Drehstromnetz.

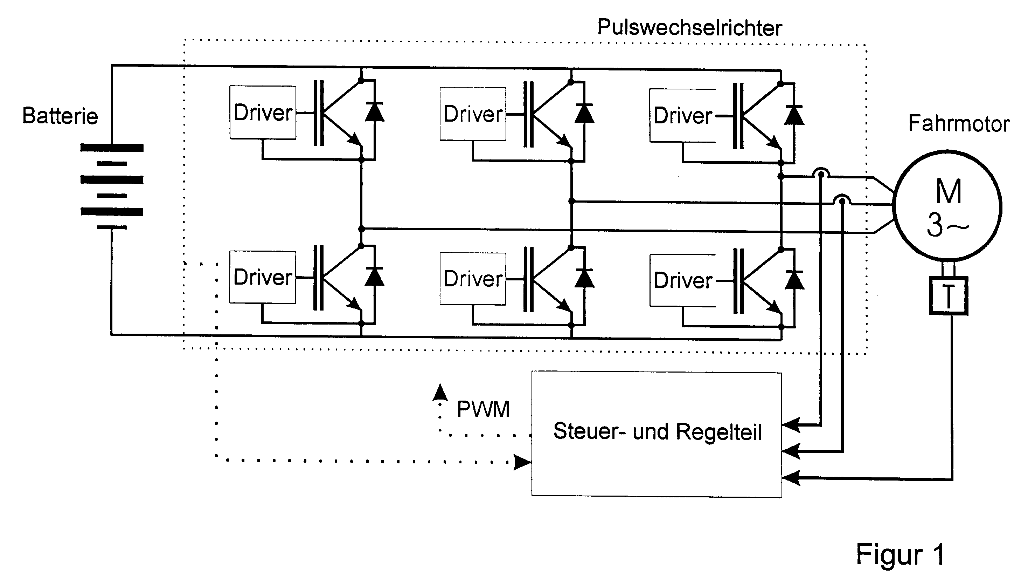

Das Prinzip der Ansteuerung drehzahlvariabler Drehstrommaschinen unter Verwendung von Pulswechselrichterschaltungen ist bekannt und in Figur 1 dargestellt. Dabei wird jede der drei Statorwicklungen des Motors mittels einer pulsgesteuerten Halbbrücke mit dem oberen oder unteren Potential der Batteriespannung verbunden. Ein Steuer- und Regelteil mißt und regelt die für den gewünschten Betrieb erforderlichen Größen, wie Motordrehzahl und Motorstrom. Derartige batteriegespeiste Antriebe finden insbesondere in Flurförderfahrzeugen Verwendung.

Die im Fahrbetrieb relativ schnell verbrauchte Batterie muß zyklisch wieder am Netz aufgeladen werden. Hierzu finden Ladegeräte mit ein- oder dreiphasiger Wechselstromeinspeisung Verwendung. Soll das Ladegerät als Bestandteil des Fahrzeugs mitgeführt werden, besteht die Forderung nach einer kompakten Ausführung des Ladegeräts. Als derartige Ladegeräte werden einphasige Netzeinspeisungsgeräte verwendet, deren Stromaufnahme auf 16A begrenzt ist. Da dabei die Ladeleistung auf ca. 3,6 kW begrenzt ist, läßt sich eine gewünschte Schnelladung hiermit nicht realisieren. Hierfür ist eine Drehstromeinspeisung erforderlich.

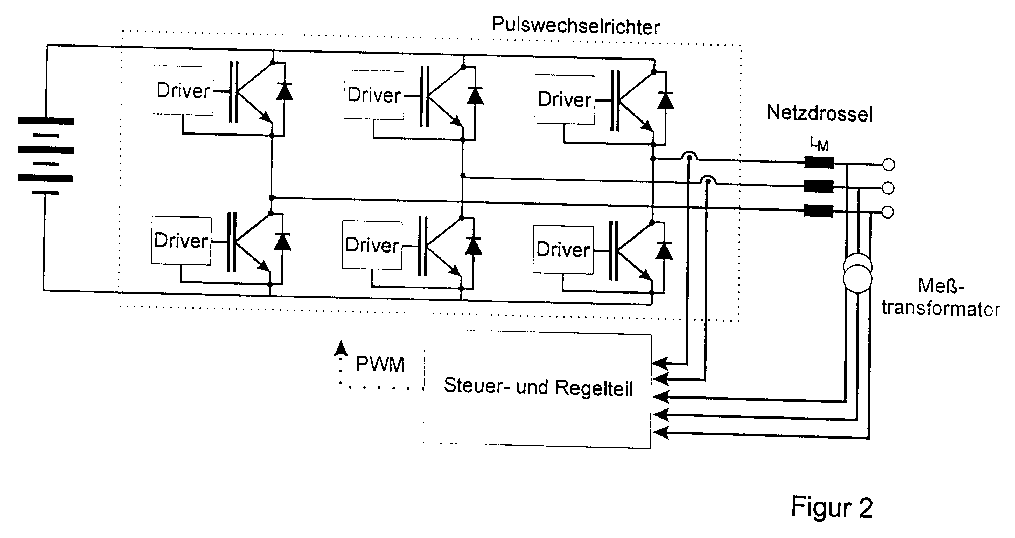

Für die Drehstromeinspeisung eines Ladegerätes ist die in Figur 2 dargestellte Anordnung bekannt. Hierbei wird ein Pulswechselrichter eingesetzt, mit dem eine geregelte, netzfreundliche Ladung möglich ist. Zwischen dem Drehstromnetz und den Wechselrichtern befindet sich eine Netzdrossel zur Netzstromglättung. Die dargestellte Schaltungsanordnung arbeitet nach dem Hochsetzstellerprinzip, da die Batteriespannung immer höher sein muß als der maximal zu erwartende Netzspannungsscheitelwert. Zusätzlich zu der Darstellung in Figur 2 ist daher eine Spannungsanpassung erforderlich, die konventionell mit Hilfe eines Drehstromtransformators ausgeführt wird. Ein derartiges Ladegerät läßt sich nicht im Fahrzeug mitführen, da vor allem das hohe Gewicht des Drehstromtransformators nicht akzeptabel ist.

Eine zum Drehstromtransformator alternative Lösung durch Einsatz eines DC-DC-Wandlers zur Spannungsanpassung läßt den elektronischen Aufwand erheblich ansteigen. Zusätzlich wären immer noch Netzdrosseln erforderlich, die wiederum ein erhebliches Zusatzgewicht darstellten.

Es ist beispielsweise durch JP 6-245327 A und JP 6-292304 A bekannt, Wicklungen der Drehstrommaschine als Netzdrosseln im Ladebetrieb zu verwenden, um somit die Verwendung separater Netzdrosseln zu vermeiden. Soweit die Ladung dabei über die Pulswechselrichterschaltungen erfolgen soll, findet eine ungeregelte Ladung der Batterie mit dem Scheitelwert der Drehstrom-Netzspannung statt, da die Freilaufdioden der Halbleiterschalter der Pulswechselrichterschaltungen durchschalten. Eine derartige Ladung beeinträchtigt die Lebensdauer der Batterie.

Das der Erfindung zugrunde liegende Problem besteht somit darin, eine Drehstromantriebsanordnung so auszubilden, daß eine geregelte Ladung möglich ist und das Ladegerät im Fahrzeug mitgeführt werden kann.

Zur Lösung dieser Aufgaben ist erfindungsgemäß eine Drehstromantriebsanordnung der eingangs erwähnten Art dadurch gekennzeichnet, daß für die Durchführung der Batterieladung Drehstrom-Netzanschlußklemmen mit den Wicklungen der Drehstrommaschine so verbunden sind, daß die Drehstromspannung auf einen Scheitelwert unterhalb der Batteriespannung heruntertransformiert wird und daß ein Steuer- und Regelteil die Pulswechselrichterschaltungen so steuert, daß die Aufladung der Batterie über die Pulswechselrichterschaltungen nach dem Hochstellerprinzip erfolgt.

Die Erfindung erlaubt die Realisierung eines voll funktionsfähigen Ladegeräts, daß in die Drehstromantriebsanordnung vollständig integriert ist und für die Spannungsherabsetzung Wicklungen der Drehstrommaschine und für die Regelung den Pulswechselrichter der Antriebsanordnung ausnutzt. Demzufolge ist praktisch kein Zusatzaufwand erforderlich, wenn man von einer etwaigen Modifizierung der Wicklungen der Drehstrommaschine absieht, die aber auch nicht immer erforderlich ist.

Insbesondere kann erfindungsgemäß das Steuer- und Regelteil für die Antriebssteuerung zugleich als Steuer- und Regelteil für den Ladebetrieb ausgelegt sein.

Im allgemeinen wird es zweckmäßig sein, die Drehstromanschlußklemmen mit den statorseitigen Drehstromwicklungen der Drehstrommaschine zu verbinden. Wenn dann die statorseitigen Drehstromwicklungen mit einem Wicklungsabgriff ausgeführt sind, wirkt die jeweilige statorseitige Drehstromwicklung als Spartransformator, an dem die heruntertransformierte Spannung angreifbar ist.

Besteht ein Bedarf für eine galvanische Trennung, können die Statorwicklungen jeweils auch als zwei galvanische getrennte Wicklungen ausgeführt sein.

Die bei der erfindungsgemäßen Drehstromantriebsanordnung verwendete Drehstrommaschine kann eine Asynchronmaschine mit Kurzschlußläufer sein. Da im Kurzschlußläufer im Ladebetrieb ein Drehmoment erzeugt werden würde, ist es zweckmäßig, die Rotor-Kurzschlußwicklung der Maschine durch einen Schalter für den Ladebetrieb in den geöffneten Zustand steuerbar auszugestalten. Hierdurch wird der Blindleistungsbedarf der Rotorwicklung ausgeschaltet.

Bei der Verwendung einer Schleifringläufer-Asynchronmaschine können auch die Rotorwicklungen mit den Drehstrom-Netzanschlußklemmen verbindbar sein, wobei eine transformatorische Übertragung auf die Statorwicklungen möglich ist, an die die Pulswechselrichterschaltungen angeschlossen sind.

Besonders geeignet für die vorliegende Erfindung ist die Verwendung einer Synchronmaschine mit jeweils zwei Statorwicklungen, bei der durch das Fehlen von Rotorkurzschlußwicklungen ein Drehmoment im Ladebetrieb nicht auftreten kann.

Die Erfindung soll im folgenden anhand von in der Zeichnung dargestellten Ausführungsbeispielen erläutert werden. Es zeigen:
- **Figur 3:**: Ein Prinzipschaltbild eines Ausführungsbeispiels der Erfindung mit einer Asynchronmaschine mit Kurzschlußläufer
- **Figur 4:**: ein Prinzipschaltbild eines erfindungsgemäßen Ausführungsbeispiels mit einer Asynchronmaschine mit einem Schleifringläufer und
- **Figur 5:**: ein Prinzipschaltbild eines erfindungsgemäßen Ausführungsbeispiels mit einer Synchronmaschine.

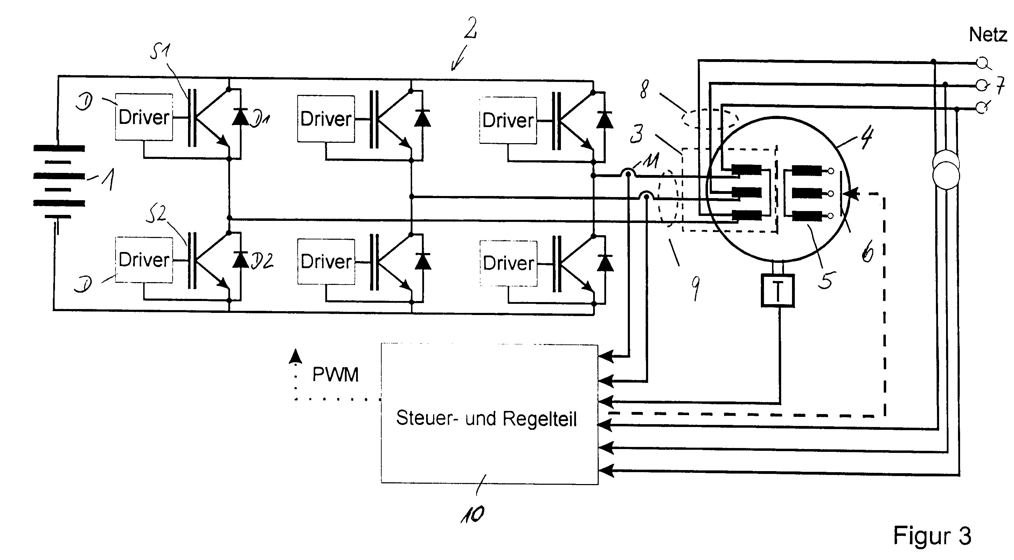

Figur 3 zeigt eine Batterie 1, an die ein Pulswechselrichter 2 in herkömmlicher Bauweise angeschlossen ist. Der Pulswechselrichter 2 besteht aus drei Halbbrücken 2 mit jeweils zwei in Reihe geschalteten Schaltern S1, S2, denen jeweils eine Freilaufdiode D1, D2 antiparallel geschaltet ist. Die Verbindungspunkte zwischen den Schaltern S1, S2 sind jeweils mit einer Statorwicklung 3 einer Drehstrommaschine 4 verbunden. Die Drehstrommaschine ist in dem dargestellten Ausführungsbeispiel eine Asynchronmaschine mit Kurzschlußläufer. Im Antriebsbetrieb sind somit Rotorwicklungen 5 durch einen Schalter 6 kurzgeschlossen.

Drehstrom-Netzanschlußklemmen 7 sind mit Endanschlüssen 8 der Statorwicklungen 3 verbunden, während die Anschlüsse zu den Pulswechselrichterschaltungen 2 jeweils über einen Abgriff 9 erfolgt sind, so daß die über die Drehstrom-Netzanschlußklemmen 7 in die Statorwicklungen 3 eingeleitete Wechselspannung nach Art eines Spartransformators heruntertransformiert wird.

Ein Steuer- und Regelteil 10 wirkt in üblicher Weise auf Treiberschaltungen D der Schalter S1, S2 zur Realisierung einer Pulsbreitenmodulation ein, durch die eine sinusförmige Wechselspannung aus der Gleichspannung der Batterie 1 herstellbar ist.

Strommeßstellen 11 in Speiseleitungen für die Rotorwicklungen und ein Temperatursensor T für die Betriebstemperatur der Drehstrommaschine 4 stellen Eingangssignale für das Steuer- und Regelteil in an sich bekannter Weise für den Antriebsbetrieb zur Verfügung. In diesem Betrieb ist der Schalter 6 durch das Steuer- und Regelteil 10 geschlossen, um die Kurzschlußwicklungen des Rotors 5 zu realisieren.

Für den mit der erfindungsgemäßen Anordnung ausführbaren Ladebetrieb wird ein Drehstromnetz an die Drehstromnetz-Anschlußklemmen 7 angelegt und die Drehstrom-Wechselspannung phasengerecht ausgekoppelt und auf das Steuer- und Regelteil 10 geleitet.

Durch die Wirkung der als Spartransformator geschalteten Statorwicklungen 3 wird die Netzspannung heruntertransformiert, und zwar auf einen solchen Wert, daß der Scheitelwert unterhalb der Spannung der Batterie 1 liegt. Dadurch wird vermieden, daß die Freilaufdiode D1, D2 im Ladebetrieb leitend werden. Vielmehr werden die Schalter S1, S2 durch das Steuer- und Regelteil so gesteuert, daß sie als Hochsetz-Steller fungieren. Dies geschieht durch die Erzeugung eines kurzfristigen Kurzschlusses in dem jeweils alle drei unteren Halbleiterschalter S2 oder alle drei oberen Halbleiterschalter S1 gleichzeitig aktiviert werden und somit die drei Motorklemmen kurzschließen. Aufgrund der induzierten Spannungen (heruntertransformierte Netzspannung) erfolgt für die Dauer des Kurzschlusses ein Stromanstieg, dessen Änderungsrate durch die Stranginduktivität begrenzt wird. Werden die genannten Halbleiterschalter dann wieder geöffnet, so fließt der Strom, getrieben durch die Stranginduktivitäten, über die Freilaufdioden in die Batterie und bewirkt den gewünschten Ladestrom. Die Stromhöhe ist mit der Pulssteuerung der Halbleiterschalter kontrollierbar. Auf diese Weise gelingt die gesteuerte Ladung der Batterie 1 mit einer Ausgangsspannung am pulswechselrichterseitigen Ende der Statorwicklungen 3, die niedriger ist als die Batteriespannung.

Die Realisierung des Schalters 6 kann dadurch erfolgen, daß die Rotorwicklungen 5 über Schleifringe nach außen geführt und dort mit dem mechanisch oder elektronisch betätigten Schalter im Fahrbetrieb kurzgeschlossen werden. Um auf Schleifringe zu verzichten, kann der Kurzschlußschalter auch vorteilhaft in den Rotor integriert werden. Bei einem elektronischen Kurzschlußschalter 6 würde das Steuersignal transformatorisch und damit berührungslos auf den Rotor übertragen werden. Bei Anwendung eines mechanischen Kurzschlußschalters würde einer der beiden Kurzschlußringe axial verschiebbar auf dem Rotor angeordnet sein, wobei ein Federmechanismus den Kurzschlußschalter im Fahrbetrieb geschlossen hält. Im Stillstand kann der Kurzschlußring zur Vorbereitung des Ladebetriebs über einen Hebelmechanismus entgegen der Federwirkung axial ausgerückt und somit die Kurzschlußwicklung geöffnet werden. Da der Hebelmechanismus nur bei Stillstand der Maschine betätigt werden würde, unterläge er keinem Verschleiß.

Ist eine galvanische Trennung von Batterie und Drehstromnetz gefordert, so besteht auch die Möglichkeit, die Drehstrommaschine 4 mit zwei galvanisch getrennten Statorwicklungen 3 auszuführen, wobei die Spannungsanpassung über das Wicklungsverhältnis erfolgen würde.

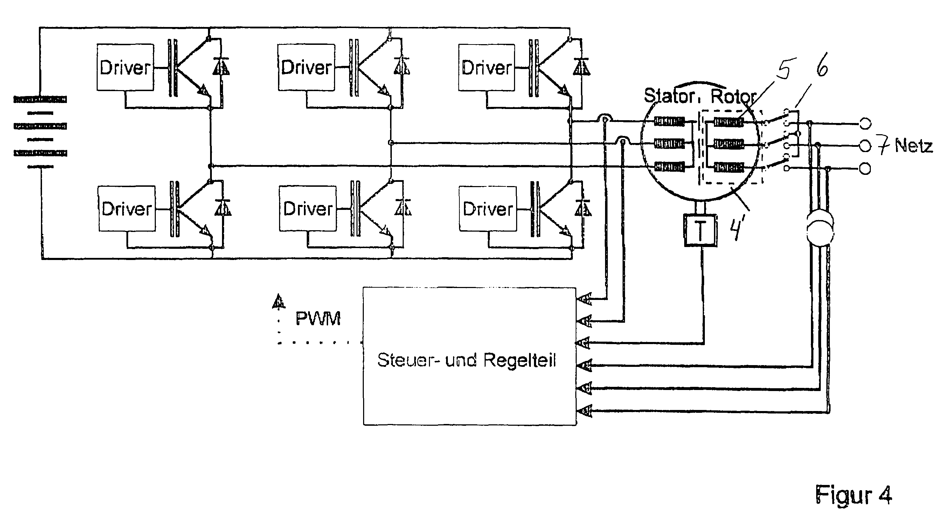

Das in Figur 4 dargestellte Ausführungsbeispiel entspricht im wesentlichen dem in Figur 3 dargestellten. Es ist lediglich für die Verwendung einer Schleifringläufer-Asynchronmaschine 4' angepaßt. Im Fahrbetrieb werden die Rotorwicklungen 5 durch den Schalter 6 kurzgeschlossen, während im Ladebetrieb die Rotorwicklungen mit den Drehstrom-Netzanschlußklemmen 7 verbunden werden. Durch das Wicklungsverhältnis von Rotorwicklungen zu Statorwicklungen wird die Netzspannung in gewünschter Weise heruntertransformiert. Der Vorteil einer galvanischen Trennung von Batterie und Netz ist dabei leicht erzielbar.

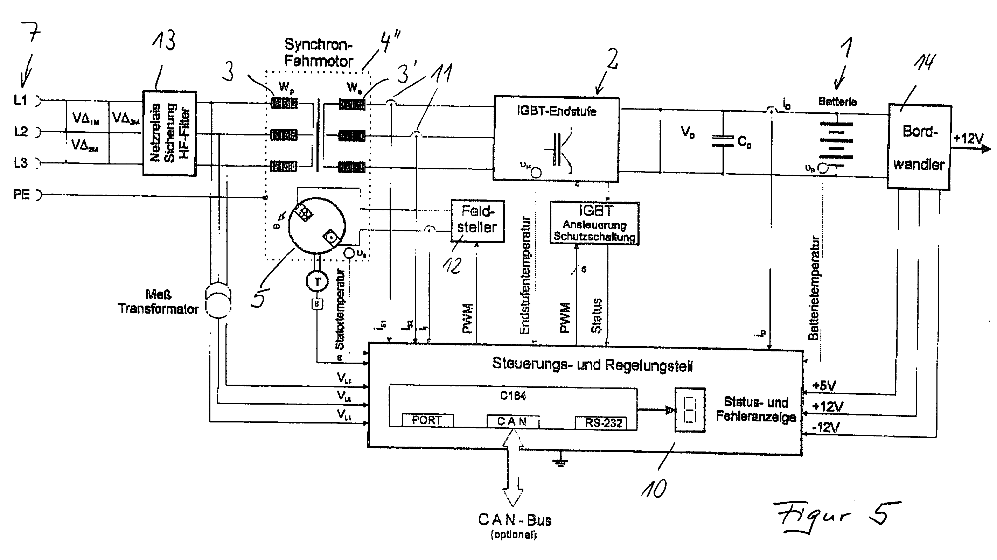

Figur 5 zeigt ein etwas komplettiertes Ausführungsbeispiel einer Drehstromantriebsanordnung für eine Synchronmaschine 4''.

Die Spannung der Batterie 1 wird durch einen Kondensator C_{D} stabilisiert und einer Pulswechselrichterschaltung 2 zugeleitet, wo drei sinusförmige Phasen einer Drehstromversorgung erzeugt werden und auf Statorwicklungen 3, 3' der Synchronmaschine 4'' gelangen. Die Statorwicklungen sind galvanisch getrennt und wirkungsmäßig transformatorisch gekoppelt. Ein Rotor 5 enthält eine Feldschleife, deren Feld durch das Steuer- und Regelteil 10 über einen Feldsteller 12 in an sich bekannter Weise gesteuert wird.

Für den Ladebetrieb sind die Drehstrom-Netzanschlußklemmen 7 über eine Schaltung 13, die ein Netzrelais, Sicherungen und Hochfrequenzfilter enthalten kann, mit den als Primärwicklungen dienenden Statorwicklungen 3 verbunden, deren induzierte Spannung transformatorisch auf die als Sekundärwicklungen dienenden Statorwicklungen 3' übertragen werden. Aufgrund des Wicklungsverhältnisses zwischen den Wicklungen 3, 3' wird die Netzspannung in der gewünschten Weise herabgesetzt. Da der Rotor 5 keine Rotorkurzschlußwicklungen trägt, wird im Ladebetrieb kein Drehmoment auf den Rotor ausgeübt, so daß keine besonderen Maßnahmen erforderlich sind, um den Rotor 5 im Ladebetrieb drehmomentfrei zu halten.

Im übrigen entspricht die Funktion des in Figur 5 dargestellten Ausführungsbeispiels den vorbeschriebenen Ausführungsbeispielen. Figur 5 zeigt noch, daß aus der Spannung der Batterie 1 über einen Gleichspannungswandler 14 die Versorgungsspannungen für das Bordnetz eines Fahrzeugs und für das Steuer- und Regelteil 10 bereitgestellt werden. In allen Fällen wird die benötigte Glättung der Netzspannung im Ladebetrieb durch Streuinduktivitäten erreicht.

## Patentansprüche

1. Drehstromantriebsanordnung mit einer batteriegespeisten, drehzahlvariablen Drehstrommaschine (4, 4', 4''), gesteuerten Pulswechselrichterschaltungen (2) zur Erzeugung angenähert sinusförmiger Drehstromwechselspannungen für die entsprechenden Wicklungen der Drehstrommaschine aus der Batteriespannung und einer Aufladeeinrichtung einer Antriebsbatterie (1) aus einem Drehstromnetz, **dadurch gekennzeichnet,** daß für die Durchführung der Batterieladung (Ladebetrieb) Drehstrom-Netzanschlußklemmen (7) mit Wicklungen (3, 5) der Drehstrommaschine (4, 4', 4'') so verbunden sind, daß die Drehstrom-Netzspannung auf einen Scheitelwert unterhalb der Batteriespannung heruntertransformiert wird und daß ein Steuer- und Regelteil (10) die Pulswechselrichterschaltungen (2) so steuert, daß die Aufladung der Batterie (1) über die Pulswechselrichterschaltungen (2) nach dem Hochsetzstellerprinzip erfolgt.

2. Drehstromantriebsanordnung nach Anspruch 1, **dadurch gekennzeichnet,** daß die Pulswechselrichterschaltungen (2) aus Halbbrückenschaltungen von pulsgesteuerten Halbleiterschaltern (S1, S2) bestehen, zu denen jeweils antiparallel eine Freilaufdiode (D) geschaltet ist.

3. Drehstromantriebsanordnung nach Anspruch 1 oder 2, **dadurch gekennzeichnet,** daß das Steuer- und Regelteil (10) für den Ladebetrieb zugleich für die Steuerung und Regelung für den Antrieb ausgelegt ist.

4. Drehstromantriebsanordnung nach einem der Ansprüche 1 bis 3, **dadurch gekennzeichnet,** daß die Drehstromanschlußklemmen (7) mit den statorseitigen Drehstromwicklungen (3) der Drehstrommaschine (4, 4'') verbunden sind.

5. Drehstromantriebsanordnung nach Anspruch 4, **dadurch gekennzeichnet,** daß die statorseitigen Drehstromwicklungen (3) mit einem Wicklungsabgriff (4) ausgeführt sind.

6. Drehstromantriebsanordnung nach Anspruch 4, **dadurch gekennzeichnet,** daß die Statorwicklungen jeweils als zwei galvanisch getrennte Wicklungen ausgeführt sind.

7. Drehstromantriebsanordnung nach einem der Ansprüche 1 bis 6, **dadurch gekennzeichnet,** daß die Drehstrommaschine eine Asynchronmaschine mit Kurzschlußläufer (4) ist, deren Rotor-Kurzschlußwicklung (5) durch einen Schalter (6) für den Ladebetrieb in den geöffneten Zustand steuerbar ist.

8. Drehstromantriebsanordnung nach einem der Ansprüche 1 bis 6, **dadurch gekennzeichnet,** daß die Drehstrommaschine eine Schleifringläufer-Asynchronmaschine (4') ist und daß die Rotorwicklungen (5) mit den Drehstrom-Netzanschlußklemmen (7) verbindbar sind.

9. Drehstromantriebsanordnung nach einem der Ansprüche 1 bis 6, **dadurch gekennzeichnet,** daß die Drehstrommaschine eine Synchronmaschine (4'') mit jeweils zwei Statorwicklungen (3, 3') ist.
